# EUROPEAN PATENT SPECIFICATION

(11) **EP 3 065 022 B1**
(45) Date of publication and mention of the grant of the patent: **15.08.2018**
(21) Application number: 16275038.4
(22) Date of filing: 01.03.2016
(51) Int. Cl.: G05D 23/19

(54) **METHODS AND SYSTEMS FOR CONTROLLING THE TEMPERATURE OF AN INTERNAL SPACE**
VERFAHREN UND SYSTEME ZUR STEUERUNG DER TEMPERATUR EINES INNENRAUMS
PROCÉDÉS ET SYSTÈMES POUR RÉGULER LA TEMPÉRATURE D'UN ESPACE INTÉRIEUR

(30) Priority: 02.03.2015 GB 201503478
(43) Date of publication of application: 07.09.2016
(73) Proprietor: Honeywell Technologies Sarl, 1180 Rolle (CH)
(72) Inventor: FERGUSON, Colin Thomas, Hamilton, Lanarkshire ML3 7JY (GB)
(74) Representative: Abel & Imray

(56) References cited:
- EP-A1- 0 909 411
- EP-A1- 2 647 921
- EP-A2- 2 407 837
- US-A- 5 344 070
- US-A- 5 937 941
- US-A1- 2005 005 621
- Anonymous: "Fuzzy control system - Wikipedia, the free encyclopedia", , 26 February 2015 (2015-02-26), XP055286469, Retrieved from the Internet: URL:https://en.wikipedia.org/w/index.php?t itle=Fuzzy_control_system&oldid=648931887 [retrieved on 2016-07-06]

## Description

### Field of the Invention

The present invention concerns methods and systems for controlling the temperature of an internal space. More particularly, but not exclusively, this invention concerns improved methods and systems for controlling the temperature of an internal space that determine optimal operational settings using feedback data obtained during previous operation of the system.

### Background of the Invention

Temperature control systems that use feedback data obtained during previous operation of the system to adapt their operation have been found to provide good temperature control. For example, the Honeywell CM900 temperature controller uses Adaptive Fuzzy Control (AFC) to provide temperature control. AFC controllers use feedback data to learn the amount of heating/cooling required for a desired temperature. The learning is performed slowly, so that short-term changes in outside temperature do not cause swings in indoor temperature.

AFC controllers have been found to provide excellent temperature control when the outside temperature is consistent. In addition, AFC controllers adapt well to seasonal changes in outside temperature. However, known AFC controllers do not manage short-term changes to outside temperature well, for example changes in temperature from day to day.

A known alternative to AFC controllers is an Outside Temperature Controller (OTC). OTC controllers provide excellent temperature control when set up correctly, however they are well known to be difficult to set correctly and it is common for them to be left at a compromise setting that provides adequate but not optimal control.

EP 2647921 A1 (Lennox Ind Inc) published 9 October 2013 discloses a system controller of a heating, ventilation and air-conditioning system configured to control the operation of a demand unit to maintain a comfort characteristic setpoint of a conditioned space. The controller includes a setback calculation module that is configured to calculate a setback value of the setpoint as a function of a recovery time from the setback value to the setpoint.

EP 2407837 A2 (Gen Electric) published 18 January 2012 discloses an apparatus and method for managing the energy of a home or other structure. The thermal characteristics of a home are determined based on variables such as inside temperatures, outside temperatures, setpoint temperatures, and duty cycles over time. Response time constants of the home are calculated and used to generate at least one transfer function or table to predict and control energy efficiency versus comfort within the home.

US 2005/005621 A1 (Jayadev Tumkur S) published 13 January 2005 discloses a strategic response control for an air conditioning system for use in an environment with increased power rates during a designated peak period. The air conditioning system includes an indoor temperature sensor for generating an input signal representing the indoor temperature, an outdoor temperature sensor for generating an input signal representing the outdoor temperature, and an operating program that sets a maximum comfort level temperature, a minimum comfort level temperature and a warmup rate for the environment in which the air conditioner operates.

The present invention seeks to mitigate the above-mentioned problems. Alternatively or additionally, the present invention seeks to provide improved methods and devices for controlling the temperature of an internal space.

### Summary of the Invention

In accordance with a first aspect of the invention, there is provided a method for controlling the temperature of an internal space using a temperature control system comprising one or more heating and/or cooling devices, wherein the temperature control system is arranged to determine a set of optimal operational settings for the one or more devices from feedback data obtained during previous operation of the system, the method comprising the steps of:
receiving a value indicative of a desired temperature;
receiving a value indicative of an ambient temperature within the internal space;
receiving a value indicative of an outside temperature outside of the internal space;
determining a set of operational settings for the one or more devices from the desired temperature and the ambient temperature; and
operating the one or more devices in accordance with the determined set of operational settings to control the temperature of the internal space;
wherein the temperature control system is arranged to determine a plurality of sets of optimal operational settings for the one or more devices corresponding to a plurality of different outside temperatures
characterised in that:
   the operational settings for the one or more devices are determined using a fuzzy logic algorithm, wherein the fuzzy logic algorithm defines, for each of the plurality of different outside temperatures, a plurality of output membership functions corresponding to a plurality of demand values, and wherein the fuzzy logic algorithm determines, using determined membership values for membership functions, a demand value for the system, and wherein the operational settings for the one or more devices are determined from the determined demand value.

The temperature control system of this aspect of the invention determines a set of optimal operational settings for the one or more devices from feedback data obtained during previous operation of the system, as done by an AFC controller for example. However, instead of having a single set of optimal operational settings for any/all outside temperatures as in known systems, the temperature control system determines different sets of optimal operational settings for different outside temperatures. In this way, the temperature control system provides the excellent temperature control provided by an adaptive control system, adapts well to seasonal changes in temperature, but is also able to manage changes in outside temperature from day to day well by incorporating the outside temperature into the control process. However, by using different sets of optimal operational settings for different outside temperatures, learning by the system can be performed slowly, avoiding swings in indoor temperature. In addition, unlike known OTC controllers, as the temperature control system maintains a different set of optimal operational settings for different outside temperatures, setting is performed automatically by the adaptive feedback process, and no difficult manual setting of the system is required. Further, the output membership values of the fuzzy logic algorithm determine the optimal operational settings from the membership values, for example the input membership value and error membership values. The different pluralities of output membership values for the different outside temperatures allows the optimal operational settings to be determined using the outside temperature.

Preferably, the fuzzy logic algorithm defines a plurality of input membership functions corresponding to a plurality of desired temperatures, and wherein the fuzzy logic algorithm determines, using the input membership functions and the desired temperature, an input membership value. The fuzzy logic algorithm can then use the input membership value when determining the optimal operational settings.

Preferably, the fuzzy logic algorithm defines error membership functions corresponding to a temperature difference below a predetermined threshold, a temperature difference within a predetermined threshold, and a temperature difference above a predetermined threshold, and wherein the fuzzy logic algorithm determines corresponding error membership values for the difference between the ambient temperature and the desired temperature. The fuzzy logic algorithm can then use the error membership value when determining the optimal operational settings. In this case, preferably the optimal operational settings for the one or more devices are adjusted using the error membership values. In this way, the adaptive control using feedback data is provided.

Preferably, the determined operational settings are not adjusted when the difference between the desired temperature and the ambient temperature is below a predetermined threshold. This provides more stable temperature control. The predetermined threshold may be 0.2 degrees Celsius, for example.

The value indicative of the outside temperature may be obtained from a temperature measuring device located outside the internal space. Alternatively, the value indicative of the outside temperature is obtained from publicly available temperature data, for example weather data obtained via the Internet.

In accordance with a second embodiment of the invention there is provided a temperature controller for controlling the temperature of an internal space using one or more heating and/or cooling devices, wherein the temperature controller is arranged to perform any of the methods described above.

In accordance with a third embodiment of the invention there is provided a temperature control system comprising a temperature controller as described above, and one or more heating and/or cooling devices.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a temperature control system in accordance with an embodiment of the invention;
- Figure 2: is a graph of input membership functions used by the temperature controller of Figure 1;
- Figure 3: is a graph of error membership functions used by the temperature controller of Figure 2;
- Figure 4: is a graph of output membership functions used by the temperature controller of Figure 3.

### Detailed Description

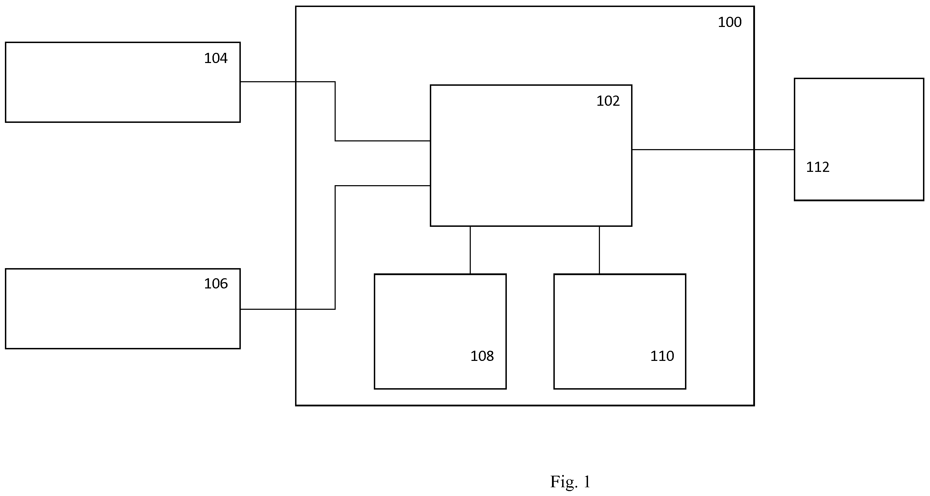

A temperature control system for controlling the temperature of an internal space in accordance with an embodiment of the invention is shown in Figure 1. In the embodiment the internal space is a room within a building. The temperature control system comprises a temperature controller 100, which comprises a processor 102 in communication with a user interface 108 and a memory unit 110. The user interface 108, for example a touchscreen interface, allows a user to select a desired temperature for the room.

The temperature controller 100 is in communication with an ambient temperature sensor 106 located inside the room, which provides an indication of the ambient temperature of the room. The temperature controller 100 is also in communication with an outside temperature sensor 104 located outside the room, which provides an indication of the outside temperature outside the room. In an alternative embodiment, the temperature controller 100 is in communication with a remote computer device that provides on request an indication of the outside temperature outside the room, for example a server accessed via the Internet that provides local weather data.

Finally, the temperature controller 100 is in communication with a heating device 112, with which it can provide heat to affect the ambient temperature within the room. In alternative embodiments the temperature controller 100 is in communication with a plurality of such heating devices and/or cooling devices with which it can affect the ambient temperature within the room.

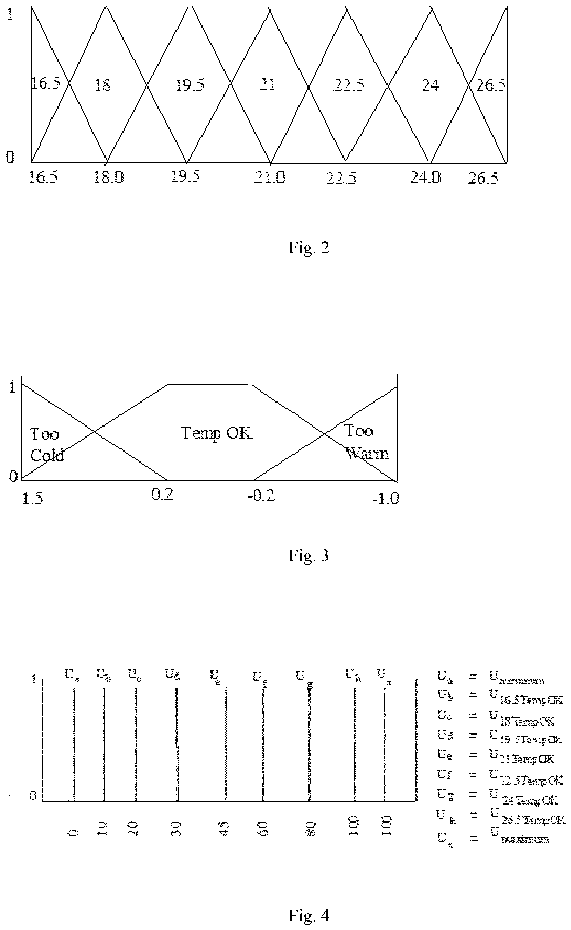

The operation of the temperature controller 100 to control the temperature within the room is now described, with reference to Figures 2 to 4.

Figure 2 is a graph of input membership functions used by the temperature controller 100. As can be seen, there are seven input membership functions for desired temperatures 16.5, 18, 19.5, 21, 22.5, 24 and 26.5 degrees Celsius. It will be appreciated that other input membership functions could be used.

An input membership value can be determined for a desired temperature, as the "degree of membership" (the y-axis of the graph of Figure 2) of the various input membership functions. For example, a desired temperature of 21 degrees Celsius would have an input membership value of 1 for a desired temperature of 21 degrees Celsius (obtained from the 21 degrees Celsius input membership function), but an input membership value of 0 for all other desired temperatures. A desired temperature of 20 degrees Celsius would have an input membership value of 0.33 for a desired temperature of 21 degrees, and an input measurement value of 0.67 for a desired temperature of 19.5 degrees Celsius input membership function.

Figure 3 is a graph of error membership functions used by the temperature controller 100. As can be seen, there are three error membership functions, corresponding to a temperature difference below a threshold of 0.2 degrees Celsius ("Too Cold"), a temperature difference within a threshold of 0.2 degrees Celsius below to 0.2 degrees Celsius above ("Temp OK"), and a temperature difference above a threshold of 0.2 degrees Celsius ("Too Hot").

For an error (i.e. difference between the desired temperature and the ambient temperature), there will be error membership values given by the DOMs for each of the error membership values. For example, if the ambient temperature is 1 degree Celsius below the desired temperature, the error would have an error membership value/DOM of 0.61 for the "Too Cold" function, an error membership value/DOM of 0.39 for the "Temp OK" function, and an error membership value/DOM of 0 for the "Too Hot" function.

Figure 4 is a graph of a set of output membership functions used by the temperature controller 100. The set of output membership functions is for a particular output temperature, and there will be different sets of output membership functions for other outside temperature functions. As can be seen, each output membership functions has a DOM of 1 at a single point (on the x-axis), and a DOM of zero at all other points. Each point corresponds to a demand value (in percent) for the temperature control system, i.e. a level at which the heating/cooling devices of the system should be operated. There are output membership functions for each desired temperature with the "Temp OK" error condition, i.e. U_{16.5TempOK} to U_{26.5TempOK} set at an appropriate demand value, a single output membership function Uₘᵢₙᵢₘᵤₘ for all "Too Warm" error conditions with a demand value of 0%, and a single output membership function Uₘₐₓᵢₘᵤₘ for all "Too Cold" error conditions with a demand value of 100%.

In operation, a demand value is calculated by using the input membership value and error membership values to determine the required DOMs for the output membership functions. However, importantly and unlike known systems, in addition the outside temperature is used to determine the set of output membership functions to use.

For example, if the desired temperature is 21 degrees Celsius and the ambient temperature is 20.25 degrees Celsius, the DOM of the input membership value is 0.5 while the DOM of the "Too Cold" function is 0.5 and the DOM of the "Temp OK" function is 0.5. The DOMs are combined and the minimum of each is taken as it applies to each output measurement function, so in this example 50% of Uₘₐₓᵢₘᵤₘ is used and 50% of U_{21TempOK} is used. With the output membership functions for the outside temperature shown in Figure 4, this results in a demand value of (0.5 * 100) + (0.5 * 45) = 72.5. The operational settings for the heating device 112 are then based upon this demand value.

The adapting of the system using feedback data is done as in known systems, by modifying the demand values of the output membership functions U_{16.5TempOK} to U_{26.5TempOK} (Uₘᵢₙᵢₘᵤₘ and Uₘₐₓᵢₘᵤₘ are not changed) . However, for any particular set of output membership functions, only the feedback data for the outside temperature for that set is used when modifying their demand values.

The current DOM of each output membership function is used to determine how much that output membership function's demand value should be changed. If the DOM is zero under current conditions, its demand value is not changed. If its DOM is not zero, the change made is a function of the current error and the DOM. The function is chosen to allow the system to adapt quickly enough to new system and changing load conditions, but not so quickly to be affected by desired temperature changes that could cause overshoot. In addition, while the temperature is within 0.2 degrees Celsius of the desired temperature no changes are made, to avoid undesirable changes due to signal noise and minor disturbances in the room temperature.

While the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method for controlling the temperature of an internal space using a temperature control system comprising one or more heating and/or cooling devices (112), wherein the temperature control system is arranged to determine a set of optimal operational settings for the one or more devices from feedback data obtained during previous operation of the system, the method comprising the steps of:
receiving a value indicative of a desired temperature;
receiving a value indicative of an ambient temperature within the internal space;
receiving a value indicative of an outside temperature outside of the internal space;
determining operational settings for the one or more devices (112) from the desired temperature and the ambient temperature; and
operating the one or more devices (112) in accordance with the determined operational settings to control the temperature of the internal space;
wherein the temperature control system is arranged to determine a plurality of sets of optimal operational settings for the one or more devices (112) corresponding to a plurality of different outside temperatures; **characterised in that**:
the operational settings for the one or more devices are determined using a fuzzy logic algorithm, wherein the fuzzy logic algorithm defines, for each of the plurality of different outside temperatures, a plurality of output membership functions corresponding to a plurality of demand values, and wherein the fuzzy logic algorithm determines, using determined membership values for membership functions, a demand value for the system, and wherein the operational settings for the one or more devices are determined from the determined demand value.

2. A method according to claim 1, wherein the fuzzy logic algorithm defines a plurality of input membership functions corresponding to a plurality of desired temperatures, and wherein the fuzzy logic algorithm determines, using the input membership functions and the desired temperature, an input membership value.

3. A method as claimed in claim 1 or 2, wherein the fuzzy logic algorithm defines error membership functions corresponding to a temperature difference below a predetermined threshold, a temperature difference within a predetermined threshold, and a temperature difference above a predetermined threshold, and wherein the fuzzy logic algorithm determines corresponding error membership values for the difference between the ambient temperature and the desired temperature.

4. A method as claimed in claim 3, wherein the optimal operational settings for the one or more devices (112) are adjusted using the error membership values.

5. A method as claimed in any preceding claim, wherein the determined operational settings are not adjusted when the difference between the desired temperature and the ambient temperature is below a predetermined threshold.

6. A method as claimed in any preceding claim, wherein the value indicative of the outside temperature is obtained from a temperature measuring device (104) located outside the internal space.

7. A method as claimed in any of claims 1 to 5, wherein the value indicative of the outside temperature is obtained from publicly available temperature data.

8. A temperature controller (100) for controlling the temperature of an internal space using one or more heating and/or cooling devices (112), wherein the temperature controller is arranged to perform the method of any of claims 1 to 7.

9. A temperature control system comprising a temperature controller (100) as claimed in claim 8 and one or more heating and/or cooling devices (112).

## Patentansprüche

1. Verfahren zum Steuern der Temperatur eines Innenraums unter Verwendung eines Temperatursteuerungssystems, das eine oder mehrere Heiz- und/oder Kühlvorrichtungen (112) umfasst, wobei das Temperatursteuerungssystem ausgelegt ist, aus Rückkopplungsdaten, die während eines vorhergehenden Betriebs des Systems erhalten wurden, einen Satz optimaler Betriebseinstellungen für die eine oder die mehreren Vorrichtungen festzulegen, wobei das Verfahren die folgenden Schritte umfasst:
Erhalten eines Werts, der eine gewünschte Temperatur angibt;
Erhalten eines Werts, der eine Raumtemperatur in dem Innenraum angibt;
Erhalten eines Werts, der eine Außentemperatur außerhalb des Innenraums angibt;
Festlegen von Betriebseinstellungen für die eine oder die mehreren Vorrichtungen (112) aus der gewünschten Temperatur und der Raumtemperatur; und
Betreiben der einen oder der mehreren Vorrichtungen (112) in Übereistimmung mit den festgelegten Betriebseinstellungen, um die Temperatur des Innenraums zu steuern;
wobei das Temperatursteuerungssystem ausgelegt ist, mehrere Sätze von optimalen Betriebseinstellungen für die eine oder die mehreren Vorrichtungen (112) entsprechend den mehreren verschiedenen Außentemperaturen festzulegen;
**dadurch gekennzeichnet, dass**:
die Betriebseinstellungen für die eine oder die mehreren Vorrichtungen unter Verwendung eines Fuzzy-Logik-Algorithmus festgelegt werden, wobei der Fuzzy-Logik-Algorithmus für jede der mehreren verschiedenen Außentemperaturen mehrere Ausgangssignal-Zugehörigkeitsfunktionen entsprechend den mehreren Sollwerten definiert, und wobei der Fuzzy-Logik-Algorithmus unter Verwendung festgelegter Zugehörigkeitswerte für Zugehörigkeitsfunktionen einen Sollwert für das System festlegt und wobei die Betriebseinstellungen für die eine oder die mehreren Vorrichtungen von dem festgelegten Sollwert festgelegt werden.

2. Verfahren nach Anspruch 1, wobei der Fuzzy-Logik-Algorithmus mehrere Eingangssignal-Zugehörigkeitsfunktionen entsprechend den mehreren gewünschten Temperaturen definiert und wobei der Fuzzy-Logik-Algorithmus unter Verwendung der Eingangssignal-Zugehörigkeitsfunktionen und der gewünschten Temperatur einen Eingangssignal-Zugehörigkeitswert festlegt.

3. Verfahren nach Anspruch 1 oder 2, wobei der Fuzzy-Logik-Algorithmus Fehler-Zugehörigkeitsfunktionen entsprechend einem Temperaturunterschied unter einem vorgegebenen Schwellenwert, einem Temperaturunterschied innerhalb eines vorgegebenen Schwellenwerts und einem Temperaturunterschied oberhalb eines vorgegebenen Schwellenwerts definiert, und wobei der Fuzzy-Logik-Algorithmus entsprechende Fehler-Zugehörigkeitswerte für den Unterschied zwischen der Raumtemperatur und der gewünschten Temperatur festlegt.

4. Verfahren nach Anspruch 3, wobei die optimalen Betriebseinstellungen für die eine oder die mehreren Vorrichtungen (112) unter Verwendung der Fehler-Zugehörigkeitswerte angepasst werden.

5. Verfahren nach einem der vorhergehenden Ansprüche, wobei die festgelegten Betriebseinstellungen nicht angepasst werden, wenn der Unterschied zwischen der gewünschten Temperatur und der Raumtemperatur unter einem vorgegebenen Schwellenwert liegt.

6. Verfahren nach einem der vorhergehenden Ansprüche, wobei der Wert, der die Außentemperatur angibt, von einer Temperaturmessvorrichtung (104) erhalten wird, die sich außerhalb des Innenraums befindet.

7. Verfahren nach einem der Ansprüche 1 bis 5, wobei der Wert, der die Außentemperatur angibt, von öffentlich verfügbaren Temperaturdaten erhalten wird.

8. Temperatursteuerung (100) zum Steuern der Temperatur eines Innenraums unter Verwendung einer oder mehrerer Heiz- und/oder Kühlvorrichtungen (112), wobei die Temperatursteuerung ausgelegt ist, das Verfahren nach einem der Ansprüche 1 bis 7 auszuführen.

9. Temperatursteuerungssystem, das eine Temperatursteuerung (100) nach Anspruch 8 und eine oder mehrere Heiz- und/oder Kühlvorrichtungen (112) umfasst.

## Revendications

1. Procédé de régulation de la température d'un espace intérieur à l'aide d'un système de régulation de la température comprenant un ou plusieurs dispositifs de chauffage et/ou de refroidissement (112), le système de régulation de la température étant conçu pour déterminer un jeu de réglages fonctionnels optimaux pour le ou les dispositifs à partir de données de retour d'information obtenues au cours d'un fonctionnement antérieur du système, le procédé comprenant les étapes suivantes :
réception d'une valeur indiquant une température souhaitée ;
réception d'une valeur indiquant une température ambiante au sein de l'espace intérieur ;
réception d'une valeur indiquant une température extérieure à l'extérieur de l'espace intérieur ;
détermination de réglages fonctionnels pour le ou les dispositifs (112) à partir de la température souhaitée et de la température ambiante ; et
fonctionnement du ou des dispositifs (112) selon les réglages fonctionnels déterminés dans le but de réguler la température de l'espace intérieur ;
le système de régulation de la température étant conçu pour déterminer une pluralité de jeux de réglages fonctionnels optimaux pour le ou les dispositifs (112) correspondant à une pluralité de températures extérieures différentes ;
**caractérisé en ce que** :
les réglages fonctionnels pour le ou les dispositifs sont déterminés à l'aide d'un algorithme de logique floue, l'algorithme de logique floue définissant, pour chacune de la pluralité de températures extérieures différentes, une pluralité de fonctions d'appartenance de sortie correspondant à une pluralité de valeurs de demande, et l'algorithme de logique floue déterminant, à l'aide de valeurs d'appartenance déterminées pour des fonctions d'appartenance, une valeur de demande pour le système, et les réglages fonctionnels pour le ou les dispositifs étant déterminés à partir de la valeur de demande déterminée.

2. Procédé selon la revendication 1, dans lequel l'algorithme de logique floue définit une pluralité de fonctions d'appartenance d'entrée correspondant à une pluralité de températures souhaitées, et dans lequel l'algorithme de logique floue détermine, à l'aide des fonctions d'appartenance d'entrée et de la température souhaitée, une valeur d'appartenance d'entrée.

3. Procédé selon la revendication 1 ou 2, dans lequel l'algorithme de logique floue définit des fonctions d'appartenance d'erreur correspondant à une différence de température en-deçà d'un seuil prédéterminé, une différence de température s'inscrivant dans un seuil prédéterminé et une différence de température au-delà d'un seuil prédéterminé, et dans lequel l'algorithme de logique floue détermine des valeurs d'appartenance d'erreur correspondantes pour la différence entre la température ambiante et la température souhaitée.

4. Procédé selon la revendication 3, dans lequel les réglages fonctionnels optimaux pour le ou les dispositifs (112) sont ajustés à l'aide des valeurs d'appartenance d'erreur.

5. Procédé selon l'une quelconque des revendications précédentes, dans lequel les réglages fonctionnels optimaux ne sont pas ajustés lorsque la différence entre la température souhaitée et la température ambiante est en-deçà d'un seuil prédéterminé.

6. Procédé selon l'une quelconque des revendications précédentes, dans lequel la valeur indiquant la température extérieure est obtenue à partir d'un dispositif de mesure de la température (104) situé à l'extérieur de l'espace intérieur.

7. Procédé selon l'une quelconque des revendications 1 à 5, dans lequel la valeur indiquant la température extérieure est obtenue à partir de données de température accessibles au public.

8. Régulateur de température (100) permettant de réguler la température d'un espace intérieur à l'aide d'un ou de plusieurs dispositifs de chauffage et/ou de refroidissement (112), le régulateur de température étant conçu pour mettre en oeuvre le procédé selon l'une quelconque des revendications 1 à 7.

9. Système de régulation de la température comprenant un régulateur de température (100) selon la revendication 8 et un ou plusieurs dispositifs de chauffage et/ou de refroidissement (112).
